Europäisches Patentamt

European Patent Office

Office européen des brevets

(19)

(11) **EP 1 035 493 A1**

(12) # DEMANDE DE BREVET EUROPEEN

(43) Date de publication:
**13.09.2000 Bulletin 2000/37**

(51) Int Cl.⁷: $G06K\ 9/52$

(21) Numéro de dépôt: **00400548.4**

(22) Date de dépôt: **29.02.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **03.03.1999 FR 9902632**

(71) Demandeur: **FRANCE TELECOM**
**75015 Paris (FR)**

(72) Inventeurs:
• **Gardes, Joel**
**90000 Belfort (FR)**

• **Cariou, Claude**
**22300 Lannion (FR)**
• **Iviglia, Joel**
**93210 Sevres (FR)**
• **Ogier, Jean-Marc**
**76710 Montville (FR)**

(74) Mandataire: **Des Termes, Monique**
**c/o Société de Protection des Inventions**
**3, rue du Docteur Lancereaux**
**75008 Paris (FR)**

(54) ## Procédé de reconnaissance de formes

(57) L'invention concerne un procédé de reconnaissance de formes comprenant successivement une étape (2) de détection d'une forme (F), une étape de caractérisation (3) de la forme issue de l'étape (2) de détection et une étape de reconnaissance (4) de la forme issue de l'étape de caractérisation, caractérisé en ce que l'étape de caractérisation (3) de la forme est une étape permettant d'obtenir des descripteurs invariants ($D_F$) de la forme par transformée de Mellin Fourier.

## *FIG.1*

$$I \rightarrow \boxed{\text{Pré-traitement} \atop 1} \xrightarrow{Is} \boxed{\text{Détection de la forme} \atop 2} \xrightarrow{F} \boxed{\text{Caractérisation de la forme} \atop 3} \xrightarrow{D_F} \boxed{\text{Reconnaissance de la forme} \atop 4}$$

EP 1 035 493 A1

**Description**

<u>Domaine technique et art antérieur</u>

La présente invention concerne un procédé de reconnaissance de forme indépendant de l'orientation et de la taille de la forme.

L'invention trouve une application dans le traitement numérique d'une image et, plus particulièrement, dans le domaine de la reconnaissance de documents, par exemple de documents techniques.

Il est connu deux types de méthodes de reconnaissance de forme indépendantes de l'orientation :

- les méthodes à calcul préliminaire de l'orientation de la forme et redressement de celle-ci pour l'amener à une position de référence,
- les méthodes à traitement de la forme sans réorientation.

Les techniques de reconnaissance de forme basées sur le redressement de la forme induisent des déformations de la forme. Ces déformations peuvent être suffisamment importantes pour pénaliser la classification de la forme quelle que soit la méthode utilisée (méthode KPPV (pour "K Plus Proche Voisin"), réseau de neurones). Dans le cas, par exemple, de la reconnaissance optique de caractères, cela se traduit par la production de caractères erronés.

Ce phénomène n'est pas critique si l'on cherche à reconnaître un texte structuré. En effet, un texte structuré a généralement une orientation fixe et possède un contexte représenté par les paragraphes, les mots, un nombre réduit de polices de caractères et toutes autres informations de structure. Ce contexte représente un important volume de connaissances a priori pouvant aider à la résolution d'ambiguïté de reconnaissance.

Dans le cas des plans techniques ou cartographiques, l'orientation du texte, correspondant à des annotations ou des toponymes, est très variable. Le contexte, quant à lui, ne peut pas être généralisé à l'ensemble du document. En effet, les chaînes de caractères ont un formalisme dépendant de l'objet décrit. Plusieurs polices sont utilisées, la taille et la graisse des caractères sont sujettes à variation. Ces constatations font que s'il existe bien un contexte dans de tels documents, il ne peut être que local, c'est-à-dire limité à une région restreinte d'un plan.

Les méthodes à traitement de la forme sans réorientation décrivent la forme à partir de descripteurs spécifiques invariants par rapport aux transformations de rotation, translation ou homothétie. Pour arriver à cette description, ces méthodes nécessitent soit l'extraction de primitives structurelles, soit l'utilisation de techniques de classification rendant le problème invariant par rapport aux transformations mentionnées ci-dessus.

Les principales méthodes connues utilisent soit l'extraction de moments invariants, soit l'extraction de primitives circulaires, soit l'extraction de descripteurs de Fourier sur les contours de la forme à reconnaître.

L'extraction des moments invariants nécessite d'utiliser des moments d'ordre très élevé pour décrire correctement une forme. Cette progression dans les ordres des moments peut poser des problèmes de classification du fait de la dynamique des valeurs calculées et de la propagation des erreurs.

En conséquence, l'extraction des moments invariants d'une forme génère des algorithmes très complexes. Cela a pour effet de pénaliser fortement la vitesse de traitement du procédé de reconnaissance de forme.

L'extraction des primitives circulaires consiste à décrire une forme en entourant celle-ci d'un cercle à partir duquel une sonde est lancée vers le centre du cercle. Cette sonde permet de décrire le profil spectral de la forme selon le rayon du cercle. En définissant un nombre suffisant de rayons, il est alors possible de constituer, pour chaque forme, un tableau de valeurs caractéristiques de la forme. Afin de déterminer la forme, les valeurs du tableau sont comparées à des valeurs de référence.

L'extraction des primitives circulaires génère également des algorithmes très complexes. Par exemple, dans le cas où les formes à reconnaître correspondent à des symboles, l'emploi des primitives circulaires peut générer des tableaux comprenant un très grand nombre de valeurs en raison de la nécessité qu'il y a, alors, à définir un grand nombre de rayons pour les différentes sondes.

En outre, ces méthodes posent des problèmes de sensibilité au bruit sur l'image (rapport signal sur bruit).

L'extraction de descripteurs de Fourier sur les contours de la forme pose de nombreux problèmes.

D'une part, il est difficile, voire impossible, de déterminer des primitives invariantes au changement d'échelle et d'orientation qui soient fiables et pertinentes. D'autre part, les descripteurs ne possèdent pas la propriété de complétude (permettant de reconstruire l'image de la forme à partir des descripteurs), ce qui traduit la faiblesse de la description. Enfin, les expérimentations montrent qu'il est difficile de déterminer un ordre pertinent à partir duquel les formes sont parfaitement décrites, tout en restant insensible au bruit de calcul.

L'invention ne présente pas ces inconvénients. En effet, l'invention concerne un procédé de reconnaissance de forme comprenant successivement une étape de détection d'une forme, une étape de caractérisation de la forme issue de l'étape de détection et une étape de reconnaissance de la forme issue de l'étape de caractérisation. L'étape de caractérisation de la forme est une étape permettant d'obtenir des descripteurs invariants de la forme $D_F(p,q)$ dans l'espace de Mellin Fourier tels que :

$$D_F(p, q) = M_F(p, q) \, [M_F(0,1]^{-q} \, [M_F(0,1)]^{q} \, [M_F(0,0,)]^{p}$$

où $M_F(p,q)$ est la transformée de Mellin Fourier de la forme, p et q étant des coefficients traduisant respectivement l'invariance de la forme par rotation et par changement d'échelle.

Le procédé de reconnaissance de forme selon l'invention s'applique à tout type de forme. Une forme peut être, par exemple, un ensemble fini de points définissant une courbe (fermée ou non) et/ou une surface.

Un avantage de l'invention est de permettre de reconnaître une forme en faisant abstraction du contexte global dans lequel elle se situe et en n'appliquant pas de transformation géométrique à la forme.

Dans de nombreuses scènes, des formes peuvent être accolées ou imbriquées les unes avec les autres. La reconnaissance de ces formes représente un problème difficile à résoudre. Le procédé selon l'invention apporte une réponse efficace pour résoudre ce problème.

<u>Brève description des figures</u>

D'autres caractéristiques et avantages de l'invention apparaîtront à la lecture d'un mode de réalisation préférentiel de l'invention fait en référence aux figures ci-annexées parmi lesquelles :

- la figure 1 représente le schéma de principe d'un procédé de reconnaissance de formes selon l'invention,
- la figure 2 représente un organigramme de l'utilisation d'un procédé de reconnaissance de formes selon un premier mode de réalisation de l'invention,
- la figure 3 représente un organigramme de l'utilisation d'un procédé de reconnaissance de formes selon un deuxième mode de réalisation de l'invention.

Sur toutes les figures, les mêmes repères désignent les mêmes éléments.

<u>Description détaillée de modes de mise en oeuvre de l'invention</u>

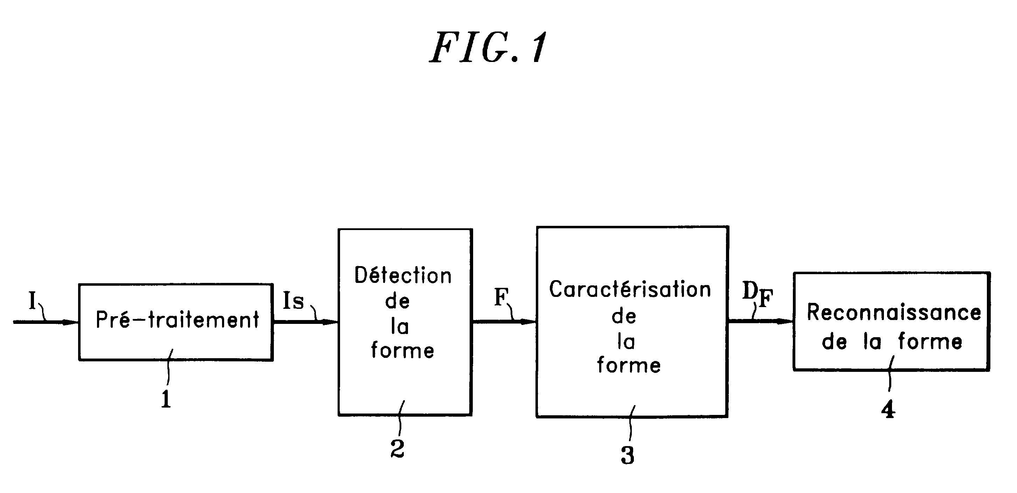

La figure 1 représente le schéma de principe d'un procédé de reconnaissance de formes selon l'invention.

Le procédé de reconnaissance d'une forme comprend quatre étapes principales successives :

- une étape 1 de pré-traitement de l'image originale I de façon à générer une image pré-traitée Is,
- une étape 2 de détection d'une forme F contenue dans l'image pré-traitée Is,
- une étape 3 de caractérisation de la forme détectée F de façon à générer des descripteurs de la forme F,
- une étape 4 de reconnaissance de la forme par comparaison des descripteurs de la forme avec des descripteurs de référence.

Selon l'étape 1 de pré-traitement, l'image originale I est tout d'abord scannée de façon à produire une image source.

L'image I est scannée, par exemple, sous un format de 8 bits et à résolution élevée, par exemple supérieure à 400 dpi (dpi pour "dot per inch"). L'image source est alors traitée de façon à définir une zone d'intérêt de l'image. Le traitement de l'image peut alors être effectué, par exemple, par seuillage, le ou les niveau(x) de seuil appliqué(s) étant déterminé(s) par un algorithme de seuillage à partir de l'histogramme du niveau de gris de l'image source. Ce seuillage permet de définir différentes classes (au moins deux) de niveaux de gris dans l'histogramme de l'image. Par exemple, au moins une de ces classes correspond au fond de l'image et n'est pas retenue : le mode du fond est alors ramené à zéro dans l'image source. De cette opération, on peut déduire un masque qui permet de définir une zone d'intérêt de l'image. Une image masquée est obtenue par application du masque à l'image source. Cette image masquée ne contient donc plus que les éléments de l'image originale I qui sont choisis comme significatifs.

On réalise ensuite un traitement local de l'image : l'image masquée subit un seuillage adaptatif à l'aide d'un algorithme de seuillage. On obtient alors une image seuillée Is. L'opération de seuillage réalisée sur l'image masquée est plus précise que celle qui aurait été réalisée directement sur l'image source. En particulier, on peut obtenir, grâce à ce procédé, la différenciation de certains détails de l'image qui auraient été sinon confondus s'il avait été procédé directement au seuillage sur l'image source.

L'étape 2 est une étape permettant de détecter dans l'image seuillée Is la forme à reconnaître.

Les formes candidates à la reconnaissance de caractères et de symboles sont représentées dans l'image par un ensemble de composantes dont les caractéristiques géométriques et statistiques sont spécifiques.

Selon un premier mode de réalisation de l'invention, l'étape de détection de la forme comprend une étape d'extraction des composantes connexes de la forme. L'extraction des composantes connexes est réalisée par un extracteur de contour et par un algorithme de balayage de l'intérieur du contour permettant de repérer les points contenus à l'intérieur du contour. Cette étape d'extraction des composantes connexes fait l'objet d'une demande de brevet déposée au nom de la Demanderesse, le 7 mai 1998 et intitulée "Procédé de segmentation et de reconnaissance de formes d'un document, notamment d'un plan technique". Cette étape d'extraction est décrite ci-dessous.

L'extraction des caractères est obtenue grâce à un extracteur de composantes connexes. Afin de ne retenir que les caractères et les symboles dont la forme est à reconnaître, un filtrage sur la taille des composantes est effectué en rejetant toutes celles dont la taille est incompatible avec la taille d'un caractère ou d'un symbole.

Dans une première phase de l'étape 2, il est alors procédé à une opération d'extraction des masses de pixels connexes présentes dans l'image seuillée Is. Des images élémentaires sont ainsi produites, chaque image élémentaire représentant des masses, ou des formes, similaires de pixels.

Ces formes sont ensuite triées par critères morphologiques. Une opération de segmentation permet d'étiqueter les formes et de les classer selon des critères morphologiques. A la suite de l'opération de segmentation, un ensemble de "couches" physiques représentatives du document sont définies. Le fait de trier les formes en fonction de leur morphologie permet de les soumettre, par la suite, à des algorithmes de reconnaissance spécialisés et adaptés à chaque forme.

Chacune des différentes couches physiques ainsi définie peut être à son tour considérée comme un masque pour l'image source Is. L'application de ces masques à l'image source Is permet d'extraire une zone d'image englobant la forme candidate. Chaque couche physique permet ainsi de retrouver l'information qui lui correspond, en niveau de gris, dans l'image source Is.

Chacune des formes candidates peut être à son tour soumise à un traitement par seuillage afin d'améliorer la segmentation de l'image. Une fois les nouveaux seuils déterminés sur une forme candidate ,un nouveau cycle peut recommencer avec cette forme : elle peut être à nouveau segmentée par la taille des masques connexes. Il est alors possible d'arriver à séparer des formes qui pouvaient apparaître comme accolées dans l'image source Is. De nombreux algorithmes d'extraction de composantes connexes existent. De façon préférentielle, l'algorithme d'extraction de composantes connexes utilisé selon l'invention est basé sur un extracteur de contours. L'avantage d'un algorithme basé sur un extracteur de contours consiste en sa capacité à recenser les primitives géométriques et structurelles des composantes (barycentre, périmètre, occlusions, ...).

Selon un deuxième mode de réalisation de l'invention, l'étape de détection de la forme comprend une étape de désignation a priori de la forme à détecter. La mise en oeuvre d'une reconnaissance de forme basée sur une désignation a priori de la forme à détecter est particulièrement avantageuse pour discerner une forme au sein de plusieurs formes accolées. La connaissance a priori de la liste des caractères ou symboles à détecter permet de faciliter les hypothèses à prendre en compte dans l'algorithme d'analyse des composantes. Selon ce deuxième mode de réalisation de l'invention, il n'est pas nécessaire que l'étape de détection de la forme comprenne une étape d'extraction telle que décrite ci-dessus.

L'étape 3 est une étape de caractérisation de la forme F issue de l'étape 2. Selon l'invention, l'étape 3 de caractérisation de la forme est une étape permettant d'obtenir des descripteurs invariants de la forme par transformée de Mellin Fourier.

Soit $F(\rho,\theta)$ une forme définie dans le système de coordonnées polaires $(\rho,\theta)$. La transformée de Mellin Fourier $M_F(p,q)$ s'écrit :

$$M_F(p, q) = \int_{\rho=0}^{\rho_{max}} \int_{\theta=0}^{2\pi} \rho^{+\sigma_0-ip} \, e^{-iq\theta} \, F(\rho, \theta) \, d\rho d\theta \, / \, \rho \qquad (1)$$

avec $\sigma_0>0$, $\sigma_0$ étant un paramètre défini de manière heuristique pour satisfaire des problèmes de convergence de l'intégrale, permettant ainsi de garantir l'invariance aux changement d'échelle et de rotation.

Le passage en coordonnées cartésienne (x,y) donne la relation (2)

$$M_F(p, q) = \int\int_{x\,y} \exp\left(-i\left[p \log \sqrt{x^2 + y^2} + q \, \arctan\left(y/x\right)\right]\right) \frac{f(x, y)}{\sqrt{x^2 + y^2}} \, dxdy \quad (2)$$

avec $\sigma_0 = 1$.

Les valeurs "p" et "q" présentes dans les relations (1) et (2) correspondent respectivement à des coefficients traduisant l'invariance par rotation (p) et par changement d'échelle (q) de la forme $F(\rho, \theta)$.

Une image est un ensemble fini de points. La relation (3) ci-dessous est une discrétisation de la relation (2) :

$$M_F(p, q) = \sum_k \sum_l F(k, l) \exp\left[ -i\left[ p \log \sqrt{x^2+y^2} + q \; \arctan\left(\frac{y}{x}\right) \right] \right] \frac{1}{\sqrt{x^2 + y^2}} \quad (3)$$

La relation (3) correspond à une convolution entre la forme F et un filtre h à coefficients complexes.

La transformée de Mellin Fourier n'est pas invariante en soi aux facteurs d'échelle et de rotation. Toutefois, il est possible de déduire des descripteurs invariants $D_F(p,q)$ tels que :

$$D_F(p, q) = M_F(p, q) \; [M_F(0,1)]^{-q} \; [M_F(0,1)]^{q} \; [M_F(0,0)]^{p} \qquad (4)$$

L'intérêt majeur de l'expression (4) est qu'elle permet d'extraire, d'une forme quelconque, un vecteur dont les caractéristiques sont totalement invariantes au changement d'échelle et d'orientation.

L'application de cette expression au problème de reconnaissance de caractères et de symboles multi-orientés est très avantageuse puisque deux formes identiques ayant une taille et une orientation différentes présenteront un vecteur d'invariants identiques.

L'équation (3) possède la propriété de complétude. Avantageusement, les descripteurs de la forme selon l'invention permettent ainsi une description complète de la forme. Par extraction des modes p et q, nous obtenons des descripteurs invariants aux facteurs d'échelle et de rotation d'une forme. Le choix du nombre de valeurs possibles pour "p" et "q" est un compromis à trouver entre la précision voulue de la caractérisation d'une forme et le nombre de filtres à mémoriser.

Des tests statistiques sur un nombre significatif d'échantillons mettent en évidence la robustesse de la méthode puisqu'un calcul d'invariants sur des formes avec des ordres relativement faibles suffit à discriminer celles-ci. De nombreuses illustrations montrent que le calcul limité à des ordres de 0 à 4 pour les coefficients p et q sont largement suffisants pour atteindre un excellent taux de reconnaissance.

L'étape 4 est une étape de reconnaissance de formes permettant de comparer les descripteurs $D_F$ issus de la transformée de Mellin Fourier avec des descripteurs de référence. Selon l'invention, l'étape de reconnaissance de formes comprend une étape d'apprentissage des descripteurs de référence. L'étape 4 est mise en oeuvre selon les principes qui régissent les réseaux de neurones.

Un réseau de neurones peut être décrit comme un ensemble de cellules élémentaires interconnectées.

Chaque cellule élémentaire, appelée neurone, est interconnectée avec plusieurs autres neurones du même type. La structure d'interconnexion de chaque neurone avec les autres définit l'architecture du réseau et a une influence non négligeable sur les aptitudes du réseau à raisonner, c'est-à-dire à apprendre, puis à prendre des décisions. Les structures de réseau peuvent être, soit figées, soit évolutives dans le temps, en fonction du mode de fonctionnement du réseau. Il existe ainsi, suivant les architectures, des réseaux où les neurones sont tous interconnectés les uns avec les autres ou des réseaux où les neurones sont disposés en couches, l'information transitant d'une couche à l'autre.

La structure de chaque cellule élémentaire est relativement standard. Elle est généralement basée sur une modélisation simplifiée des neurones humains. Cette structure élémentaire est généralement constituée d'un ensemble d'entrée (représentation des synapses du cerveau humain) et d'une sortie. Le fonctionnement de la cellule élémentaire est très simple puisqu'il consiste à calculer le niveau de la sortie (valeur numérique), en fonction des valeurs numériques arrivant sur les entrées. Chaque cellule dispose donc d'une capacité de calcul très simplifiée, dépendant des entrées du neurone et de ce qui est appelé "les coefficients synaptiques". Les coefficients synaptiques du neurone correspondent à des poids qui sont affectés à chacune des entrées du neurone.

Chaque neurone reçoit sur chacune de ses entrées un ensemble de valeurs numériques et renvoie une valeur dépendant des entrées, des coefficients synaptiques, et de la fonction de calcul de la cellule.

Le fonctionnement d'un réseau de neurones peut être décomposé en deux phases : l'apprentissage et le test. La phase d'apprentissage peut être apparentée à celle de l'homme puisqu'elle consiste à apprendre au réseau tout ce qu'il doit apprendre. A cours de cette étape, le réseau est en phase de constitution, de structuration et tous les calculs effectués ont pour objectif de calculer et d'optimiser les valeurs de coefficients synaptiques pour que le réseau ait une réponse conforme à ce que l'on attend de lui. Au cours de la phase de test, le réseau n'évolue généralement plus et se contente d'apporter une réponse aux entrées qui lui sont amenées.

La phase d'apprentissage consiste à présenter au réseau de neurones un ensemble de données représentatives des données qu'il aura à traiter en phase de test. Cet ensemble, est appelé la base d'apprentissage. Au fur et à mesure que des éléments de la base d'apprentissage sont amenés au réseau, ce dernier se structure et optimise, suivant différents algorithmes, les valeurs de ses coefficients synaptiques, dans le but de trouver une adéquation optimale entre la base d'apprentissage et les réponses du réseau.

En phase de test, on amène un élément au réseau, cet élément étant traduit ou représenté par un ensemble de valeurs numériques, et le réseau propose une réponse fonction de l'entrée et des différents coefficients synaptiques.

Les techniques d'apprentissage sont nombreuses dans la littérature et dépendent des algorithmes et des structures de réseau choisis. Il existe dans la littérature de nombreuses variétés de structures de réseau, dont on peut néanmoins dégager quelques grandes lignes :

- les réseaux combinatoires à base de perceptrons multicouches,
- les réseaux dynamiques avec connexions complètes,
- les réseaux à compétition (réseaux de Kohonen, LVQ (LVQ pour "Learning Vector Quantization"), ...),
- les réseaux récurrents : réseaux rebouclés de la sortie vers l'entrée,
- les réseaux à connexions locales,
- les réseaux neuronaux à délais temporels (TDNN),
- les réseaux à structures adaptatives.

Les algorithmes d'apprentissage dépendent donc de la structure de réseau adopté. Les techniques d'apprentissage sont également très nombreuses dans la littérature, mais certaines d'entre elles semblent plus répandues car plus simples à implémenter. Parmi celles-ci, on peut distinguer l'algorithme de rétropropagation du gradient (pour les réseaux à base de perceptron multicouches) ou les algorithmes basés sur une compétition entre neurones (Kohonen).

Comme cela a été mentionné précédemment, la phase d'apprentissage consiste à présenter au réseau de neurones un ensemble de données représentatives des données qu'il aura à traiter en phase de test.

Selon l'invention, les données à traiter en phase de test sont les descripteurs $D_F$ issus de la transformée de Mellin Fourier. Ainsi, les données présentées au réseau de neurones en phase d'apprentissage sont-elles constituées d'éléments permettant de constituer des descripteurs de référence. Durant la phase de test, les descripteurs $D_F$ issus de la transformée de Mellin Fourier sont alors comparés aux descripteurs de référence.

Avantageusement, selon l'invention, la détermination des descripteurs de référence est très simple à obtenir puisqu'elle s'appuie sur la description des formes à partir des invariants de Mellin Fourier avec des ordres de p et q assez faibles, par exemple variant de 0 à 4.

Selon le mode de réalisation préférentiel de l'invention, la technique d'apprentissage choisie est du type à réseaux de compétition.

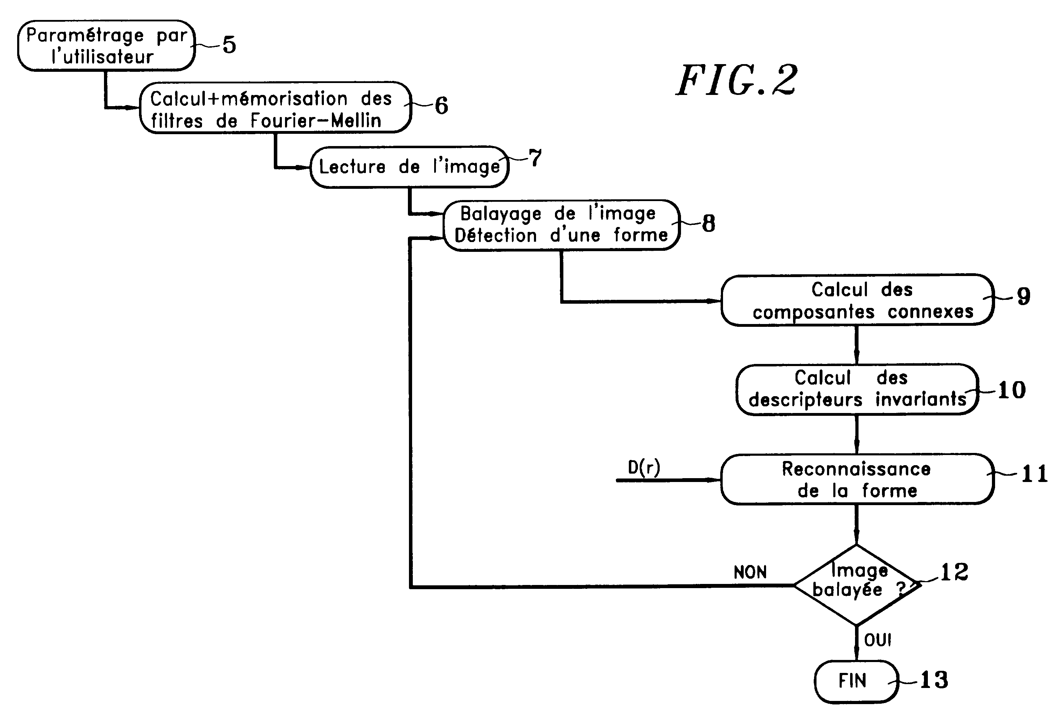

La figure 2 représente un organigramme de l'utilisation d'un procédé de reconnaissance de formes selon un premier mode de réalisation de l'invention.

Plus précisément, la figure 2 représente l'utilisation non déterministe de la transformée de Mellin Fourier pour la reconnaissance des formes connexes détectées. Par utilisation non déterministe, il faut entendre l'utilisation du procédé de reconnaissance de formes selon l'invention pour lequel il n'y a pas de désignation a priori de la forme à détecter.

Une première étape 5 de paramétrage permet de choisir les valeurs à affecter aux coefficients p et q respectivement associés à l'invariance par rotation et à l'invariance par changement d'échelle de la forme à reconnaître. L'étape 5 permet également le paramétrage des différents seuillages mentionnés précédemment.

Une étape 6 de calcul et de mémorisation des filtres de Mellin Fourier succède à l'étape 5 : sur la base des valeurs de p et q, les filtres $M_F(p,q)$ sont alors calculés.

A l'étape 6, succède une étape 7 de lecture de l'image durant laquelle l'image est chargée et scannée. L'étape 8 qui succède à l'étape 7 est une étape de balayage de l'image et de détection d'une forme par segmentation. Il s'agit alors de déterminer les masses connexes de la forme.

A l'étape 8 succède l'étape 9 de calcul des composantes connexes de la forme détectée. A partir des composantes connexes de la forme, les descripteurs invariants de Mellin Fourier sont alors calculés lors de l'étape 10.

Les descripteurs invariants obtenus à l'issue de l'étape 10 sont alors comparés avec les descripteurs de référence D(r) issus d'une étape d'apprentissage (non représentée sur la figure).

Si l'image a été entièrement balayée, le procédé de reconnaissance de forme est achevé (étape 13). Sinon, il y a retour à l'étape 8.

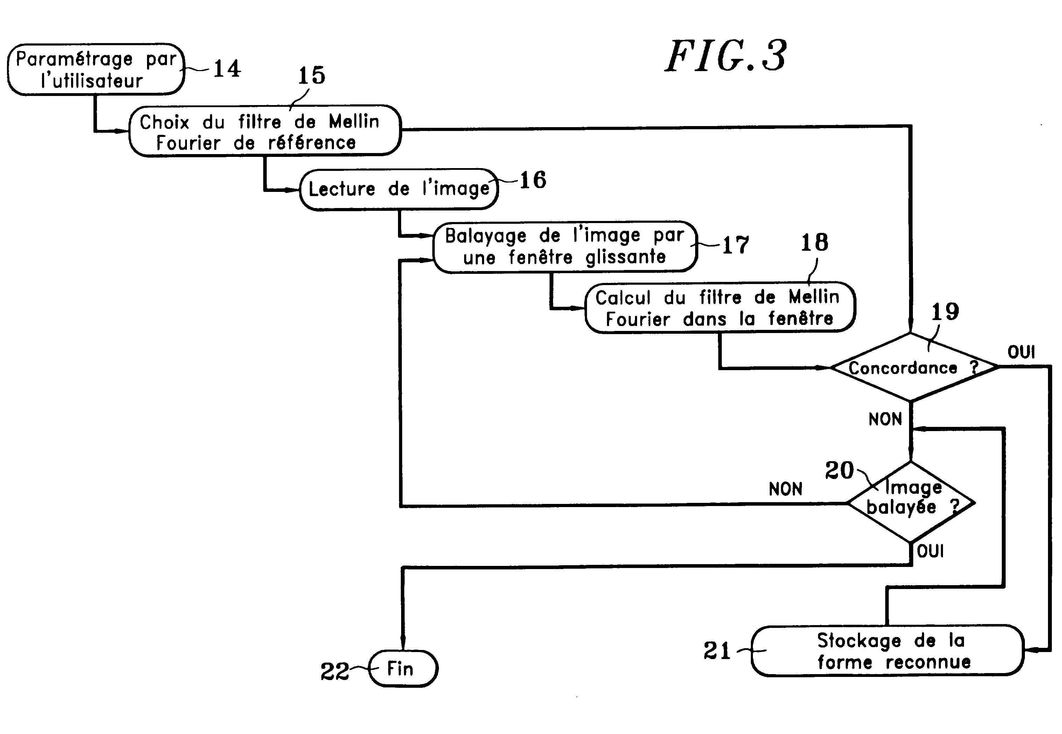

La figure 3 représente un organigramme de l'utilisation d'un procédé de reconnaissance de formes selon un deuxième mode de réalisation de l'invention.

Plus précisément, la figure 3 représente l'utilisation déterministe de la transformée de Mellin Fourier pour la reconnaissance des formes connexes détectées. Par utilisation déterministe, il faut entendre l'utilisation du procédé de reconnaissance de formes selon l'invention pour lequel il y a désignation a priori de la forme à détecter.

Il est alors possible de discriminer et de reconnaître une forme désignée à priori parmi un ensemble d'informations susceptibles de perturber la reconnaissance de la forme. Selon l'invention, la forme désignée a priori est décrite par des descripteurs invariants qui présentent des caractères de complétude, globalité et stabilité. La recherche de la forme désignée a priori s'en trouve ainsi facilitée.

Une première étape 14 correspond à l'étape de paramétrage 5 mentionnée ci-dessus.

A l'étape 14 succède l'étape 15 de choix du filtre de Mellin Fourier de référence : c'est le filtre de Mellin Fourier qui correspond à la forme cherchée a priori.

Des descripteurs de référence qui correspondent au filtre de Mellin Fourier de référence sont alors calculés. Le procédé comprend une étape d'apprentissage des descripteurs de référence.

L'étape de lecture 16 qui succède à l'étape 15 est identique à l'étape 7 décrite ci-dessus : l'image est chargée et scannée. Une étape de balayage 17 succède à l'étape 16 : il y a un balayage de l'image par une fenêtre glissante. Dans chaque fenêtre de l'image, le calcul de la convolution d'un filtre de Mellin Fourier avec l'image est effectué (étape 18 qui succède à l'étape 17) et des descripteurs invariants en sont déduits.

S'il y a concordance entre les descripteurs invariants et les descripteurs de référence, la forme est reconnue et il y a stockage de la forme (étape 21). S'il n'y a pas concordance et si l'image a été entièrement balayée, le procédé s'arrête. S'il n'y a pas concordance et si l'image n'a pas été entièrement balayée il y a retour à l'étape 17.

## Revendications

1. Procédé de reconnaissance de formes comprenant successivement une étape de détection d'une forme, une étape de caractérisation de la forme issue de l'étape de détection et une étape de reconnaissance de la forme issue de l'étape de caractérisation, caractérisé en ce que l'étape de caractérisation de la forme est une étape permettant d'obtenir des descripteurs invariants de la forme $D_F(p,q)$ dans l'espace de Mellin Fourier tels que :

$$D_F(p, q) = M_F(p, q) \, [M_F(0,1]^{-q} \, [M_F(0,1)]^{q} \, [M_F(0,0)]^{p}$$

   où $M_F(p,q)$ est la transformée de Mellin Fourier de la forme, p et q étant des coefficients traduisant respectivement l'invariance de la forme par rotation et par changement d'échelle.

2. Procédé selon la revendication 1, caractérisé en ce qu'une forme est un ensemble fini de points définissant une courbe et/ou une surface.

3. Procédé selon l'une quelconque des revendications 1 ou 2, caractérisé en ce que l'étape de reconnaissance de la forme est une étape de comparaison des descripteurs invariants de la forme $D_F(p,q)$ avec des descripteurs de référence.

4. Procédé selon l'une quelconque des revendications 1 à 3, caractérisé en ce qu'il comprend une étape d'apprentissage des descripteurs de référence.

5. Procédé selon la revendication 4, caractérisé en ce que l'étape d'apprentissage met en oeuvre un réseau à compétition.

6. Procédé selon selon l'une quelconque des revendications 1 à 5, caractérisé en ce que l'étape de détection comprend une étape d'extraction de composantes connexes de la forme.

7. Procédé selon la revendication 6, caractérisé en ce que l'extraction des composantes connexes est réalisée par un extracteur de contour et par un algorithme de balayage de l'intérieur du contour permettant de repérer les points contenus à l'intérieur du contour.

8. Procédé selon l'une quelconque des revendications 1 à 5, caractérisé en ce que l'étape de détection comprend une étape de désignation a priori de la forme à détecter.

9. Procédé selon la revendication 8, caractérisé en ce que l'étape de désignation a priori d'une forme à détecter comprend le choix d'un filtre de Mellin Fourier de référence et le calcul des descripteurs de référence qui correspondent au filtre de Mellin Fourier de référence.

## FIG. 1

I → | Pré-traitement | → Is | Détection de la forme | → F | Caractérisation de la forme | → $D_F$ | Reconnaissance de la forme |

1          2          3          4

*FIG.2*

Paramétrage par l'utilisateur —5

Calcul+mémorisation des filtres de Fourier-Mellin —6

Lecture de l'image —7

Balayage de l'image Détection d'une forme —8

Calcul des composantes connexes —9

Calcul des descripteurs invariants —10

$D(r)$ → Reconnaissance de la forme —11

Image balayée ? —12

NON

OUI

FIN —13

EP 1 035 493 A1

FIG.3

14 Paramétrage par l'utilisateur

15 Choix du filtre de Mellin Fourier de référence

16 Lecture de l'image

17 Balayage de l'image par une fenêtre glissante

18 Calcul du filtre de Mellin Fourier dans la fenêtre

19 Concordance ? — OUI / NON

20 Image balayée ? — NON / OUI

21 Stockage de la forme reconnue

22 Fin

EP 1 035 493 A1

Office européen
des brevets

**RAPPORT DE RECHERCHE EUROPEENNE**

Numéro de la demande

EP 00 40 0548

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DIAB S L ET AL: "SCALE AND TRANSLATION INVARIANT DETECTION OF TARGETS VARYING IN FINE DETAILS" PROCEEDINGS OF THE SPIE, avril 1997 (1997-04), XP000852776 * le document en entier * --- | 1-9 | G06K9/52 |
| A | QIN-SHENG CHEN ET AL: "SYMMETRIC PHASE-ONLY MATCHED FILTERING OF FOURIER-MELLIN TRANSFORMSFOR IMAGE REGISTRATION AND RECOGNITION" IEEE TRANSACTIONS ON PATTERN ANALYSIS AND MACHINE INTELLIGENCE,US,IEEE INC. NEW YORK, vol. 16, no. 12, 1 décembre 1994 (1994-12-01), pages 1156-1168, XP000486818 ISSN: 0162-8828 * le document en entier * ----- | 1-9 | |

**DOMAINES TECHNIQUES RECHERCHES (Int.Cl.7)**

G06K

Le présent rapport a été établi pour toutes les revendications

| Lieu de la recherche | Date d'achèvement de la recherche | Examinateur |
|---|---|---|
| LA HAYE | 21 juillet 2000 | Granger, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)